# EUROPÄISCHE PATENTSCHRIFT

(11) **EP 0 345 215 B1**
(45) Veröffentlichungstag und Bekanntmachung des Hinweises auf die Patenterteilung: **05.10.1994**
(21) Anmeldenummer: 89810355.1
(22) Anmeldetag: 16.05.1989
(51) Int. Cl.: G01N 25/68

(54) **Verfahren zur Bestimmung des Taupunktes eines feuchten Gases und Vorrichtung zur Durchführung des Verfahrens**
Method for determining the dew point of a moist gas, and apparatus for carrying out the method
Procédé pour la détermination du point de rosée d'un gaz humide et appareil pour l'utilisation du procédé

(30) Priorität: 03.06.1988 CH 2130/88
(43) Veröffentlichungstag der Anmeldung: 06.12.1989
(73) Patentinhaber: Mutter, Arthur, CH-5430 Wettingen (CH)
(72) Erfinder: Mutter, Arthur, CH-5430 Wettingen (CH)
(74) Vertreter: Frauenknecht, Alois J.

(56) Entgegenhaltungen:
- US-A- 2 893 237
- US-A- 3 112 648
- US-A- 4 083 224

## Beschreibung

Die Erfindung betrifft ein Verfahren zur Bestimmung des Taupunktes eines feuchten Gases mittels eines an einem gekühlten Taupunkt-Spiegel reflektierten Lichtstrahles sowie ein Taupunktmessgerät zur Durchführung des Verfahrens, mit einem gekühlten Taupunkt-Spiegel.

Ein nach dem bekannten Verfahren arbeitendes Taupunktmessgerät ist beispielsweise in der Bedienungsanleitung K-1806 (Ausgabe Dezember 1986) der Firma MBW ELEKTRONIK AG, CH-5430 Wettingen, beschrieben.

Die Taupunktmessung erfolgt nach dem Prinzip eines gekühlten Spiegels, der solange von einem Peltierelement abgekühlt wird, bis sich ein Tau- oder Reifniederschlag auf dem Spiegel bildet. Über einer Foto-Optik wird die Kühlleistung so geregelt, bis diejenige Temperatur erreicht wird, bei der sich eine gleichbleibende Tau- oder Reifschicht einstellt. Dies bedeutet, dass zunächst bis auf eine Temperatur unterhalb des Taupunktes abgekühlt wird, bis sich eine etwas zu dicke Tau- oder Reifschicht auf dem Spiegel niedergeschlagen hat und dann wird die Kühlleistung allmählich reduziert, bis der Taupunkt erreicht ist.

Aus der US-PS 2,893,237 ist eine Vorrichtung bekannt, welche zur Reinigung eines Taupunktspiegels dient. Ein aus Verunreinigungen im Messgas bestehender Niederschlag auf dem Spiegel wird mit einem Gasstrom, welcher gegenüber dem Messgas einem erhöhtem Wassergehalt aufweist, gereinigt. Die anschliessende Taupunktmessung erfolgt in konventioneller Weise.

Bei der Taupunktbestimmung von feuchten Gasen mit einem niedrigen Wassergehalt stellt sich aber das Problem, dass es sehr lange braucht, bis der kondensierte Dampf auf dem Spiegel sichtbar wird.

Obschon diese unbefriedigende Situation schon längere Zeit bekannt ist, sind bis jetzt noch keine praktikablen Lösungen bekannt, um die Betauungszeit bzw. die Messzeit bei feuchten Gasen mit geringem Wassergehalt zu beschleunigen.

Der Erfindung stellt sich daher die Aufgabe, das bekannte Verfahren zur Taupunktmessung und die zugehörige Vorrichtung derart zu verbessern, dass eine wesentliche Beschleunigung der Messung von feuchten Gasen niedrigen Wassergehaltes erzielt wird. Es soll damit u.a. ein unterbruchsfreier und ungestörter Betrieb beim Einsatz von Taupunkt-Messgeräten in der Verfahrenstechnik gewährleistet werden.

Diese Aufgabe wird bei dem obengenannten Verfahren dadurch gelöst, dass bei Messungen tieferer Taupunkte, der Taupunkt-Spiegel kurzzeitig mit einem Gas hohen Wassergehaltes beaufschlagt wird, so dass eine Initial-Tauschicht auf dem Taupunkt-Spiegel entsteht, und dass nachfolgend das Messgas über den Taupunkt-Spiegel geführt wird.

Das Taupunktmessgerät weist die Merkmale auf, dass zwischen dem Gasventil und der Befeuchtungseinheit eine Injektorpumpe vorgesehen ist, welche von einer automatischen Kontrolleinheit so gesteuert wird, dass der Taupunkt-Spiegel zuerst mit dem in der Befeuchtungseinheit befindlichen Gas hohen Wassergehalts beaufschlagt wird.

Die Erfindung beruht auf der wesentlichen Erkenntnis, dass es vieler Wassermoleküle bedarf, um eine Wasserschicht - d.h. Tau- oder Reifschicht - auf dem Spiegel zu bilden. Insbesondere müssen Haft- und Bindungskräfte zwischen der Spiegeloberfläche und den Wassermolekülen wirksam werden. Ein Überschuss an Wassermolekülen braucht eine wesentlich kürzere Zeit, um den Spiegel sichtbar mit Dampfkondensat zu beschlagen. Dies erfolgt dadurch, dass kurzzeitig eine geringe Menge Gas mit hohem Wassergehalt in die Zufuhrleitung des Messgases eingelassen wird. Der anfängliche Wasserüberschuss - d.h. Tau- oder Reifschicht - auf der Spiegeloberfläche verflüchtet bald in dem ständig über den Spiegel strömenden Messgas niederigen Wassergehaltes. Es verbleibt ein dünner Oberflächen-film oder eine monomolekulare Schicht aus Wasser auf dem Spiegel, so dass eine weitere Kondensation aus dem Messgas erheblich beschleunigt wird.

Bei dem erfindungsgemässen Verfahren wird vorteilhafterweise bei Erreichen einer vorgewählten Temperatur, die tiefer liegt als diejenige des Taupunkts des Messgases, der Spiegel automatisch mit dem Gas hohen Wassergehaltes beaufschlagt.

Das zu messende Gas und das Gas hohen Wassergehaltes werden mit Vorteil über Druckleitungen dem Spiegel zu- und abgeführt.

Die erfindungsgemässe Vorrichtung zur Durchführung des Verfahrens ist insbesondere so gestaltet, dass die Befeuchtungseinheit unmittelbar über einer Druckleitung mit der Messgas-Abfuhrleitung verbunden ist.

Dies ergibt den Vorteil, dass der erhöhte Wassergehalt dem zur Messung benutzten Gas beigemengt wird, ohne dass ein Abbruch und/oder eine Störung der Gasströmung erfolgt.

Des weiteren besteht die Injektorpumpe vorzugsweise aus einer Verdrängerpumpe, insbesondere einer Schieberpumpe, die in einem druckfesten Gehäuse angeordnet ist.

Diese Anordnung hat den Vorteil, dass sie sowohl bei atmosphärischem Druck als auch bei Überdrucken verwendet werden kann.

Als Gasventil hat sich eine Anordnung aus einem Nadelventil und einem vorgeschalteten Rückschlagventil bewährt.

Die Befeuchtungseinheit besteht vorteilhafterweise aus einem T-förmigen Gehäuse, in dem sich ein mit destilliertem Wasser getränkter Körper befindet.

Eine besonders einfache Ausführung einer Befeuchtungseinheit besteht aus einem hygroskopischen Rohr, bevorzugt aus einem Kunststoffrohr, welches die durch Diffusion ins Innere gelangenden Wassermoleküle aus der Atmosphäre dem Messgas beimengt. In praxi hat sich hierfür ein handelsüblicher Schlauch bewährt, der völlig wartungsfrei ist.

Weitere Vorteile ergeben sich aus der nachstehenden Beschreibung. Dort wird die Erfindung anhand Ausführungsbeispielen, die in den Zeichnungen dargestellt sind, näher erläutert.

Dabei zeigt:
- Fig. 1: ein Blockdiagramm eines Taupunktmessgerätes,
- Fig. 2a: Aufzeichnung einer Messung der Betauungszeit bei einem ersten Gas mit zusätzlicher Befeuchtung im Vergleich in Relation ohne Befeuchtung,
- Fig. 2b: die Messungen entsprechend Fig. 2a bei einem zweiten Gas,
- Fig. 3: eine T-förmige Befeuchtungseinheit mit einer Wasserreserve und
- Fig. 4: eine schraubenlinienförmige Rohrleitung zur Befeuchtung ohne externe Hilfsmittel.

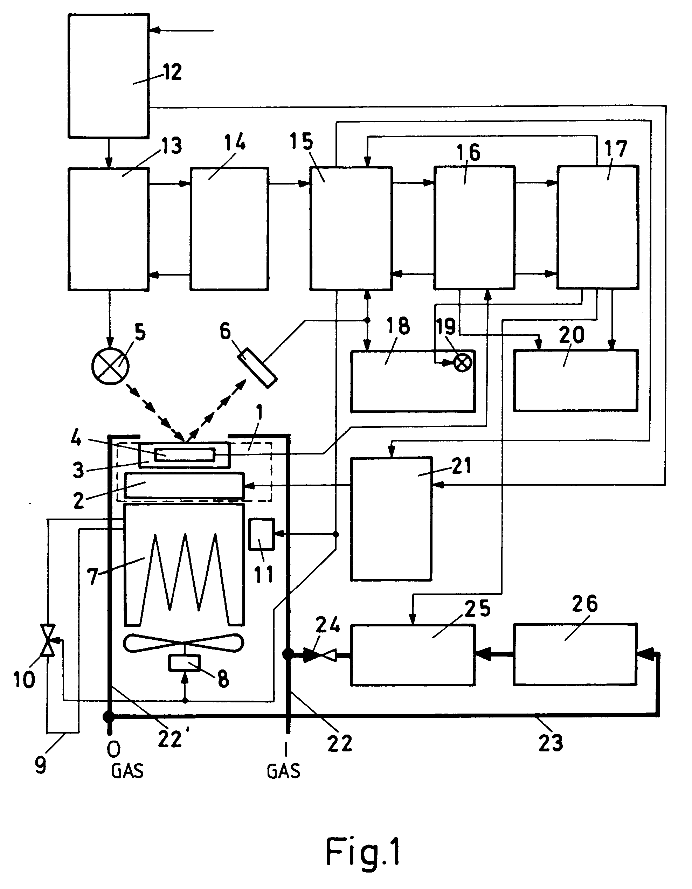

Das in Fig. 1 schematisch gezeigte Taupunktmessgerät besitzt einen Messkopf 1, der im wesentlichen ein Peltierelement 2 auf der kalten Seite eines Taupunktspiegels 3 mit einem eingebauten Temperaturmessfühler 4 beinhaltet. Der Taupunktspiegel 3 wird von einer Messkopflampe 5 beleuchtet, und das reflektierte Licht von einem Fotowiderstand 6 gemessen. Die Abwärme des Peltierelementes 2 wird von einem Wasserkühler 7 und einem den Wasserkühler 7 unterstützenden Ventilator 8 abgeführt. Sowohl der Wasserkühler 7 als auch der Ventilator 8 sind an einem Kühlwasserkreislauf 9 angeschlossen. Mit einem Wasserventil 10 wird die Kühlwasserzufuhr geregelt. Anstatt des Wasserkühlers 7 und des Ventilators 8 kann auch eine Freon-Kühlung vorgesehen sein. Eine solche Kühlung hat einen Wirkungsbereich von +80°C bis -95°C und hat den zusätzlichen Vorteil, dass sie kühlwasserunabhängig ist. Eine Heizung 11 ist dem Taupunktspiegel 3 zugeordnet, um Taupunkte, welche höher sind als die Umgebungstemperatur, messen zu können. Ein Netzteil 12 besteht aus einem Transformator und einem Leistungsgleichrichter, und liefert den notwendigen Strom für das Peltierelement 2 und die Speisespannung für die Messkopflampe 5 und die weiteren elektronischen Bausteine. Ein Lampenstabilisator 13 ist direkt mit dem Netzteil 12 verbunden und stabilisiert die Speisespannung der Messkopflampe 5 genauestens, damit keine Helligkeitsunterschiede der Lampe 5 das Messresultat nachteilig beeinflussen können. Ein weiterer Stabilisator 14, der anschliessend mit dem Lampenstabilisator verbunden ist, liefert die notwendigen Hilfsspannungen von +/- 15 Volt Gleichstrom für einen nachgeschalteten Peltierregler 15, einen Temperaturmesssignalverstärker 16 und eine automatische Spiegelkontrolleinheit 17.

Ein Spiegelindikator 18, z.B. ein Drehspuleninstrument, mit einer eingebauten Signallampe 19 zeigt die vom Taupunktspiegel 3 reflektierte Lichtmenge an. Bei einer von der Spiegelkontrolleinheit 17 automatisch ausgelösten Beheizung des Taupunktspiegels 3 leuchtet die Signallampe 19 auf. Das umgekehrt betriebene Peltierelement 2 sorgt dabei für die benötigte Beheizung. Dadurch wird der Taupunktspiegel 3 regelmässig von der Tau- oder Reifschicht befreit, da Fremddestillate im Messgas unerwünschte Kondensate auf dem Taupunktspiegel 3 bewirken, die das Messresultat verfälschen. Diese Intervall-Schaltung ist in an sich bekannter Weise vorprogrammiert und beeinflusst die übrige Messung nicht.

Eine Digitalanzeige 20 zeigt die vom Temperaturmesssignalverstärker 16 ermittelte Temperatur an und ist gleichzeitig mit der automatischen Spiegelkontrolleinheit 17 verbunden, die bewirkt, dass das Resultat einer Taupunktmessung bei Aufheizung des Taupunktspiegels 3 festgehalten werden kann.

Eine Endverstärkerstufe 21 ist direkt mit dem Netzteil 12 verbunden und liefert den notwendigen Strom für das Peltierelement 2.

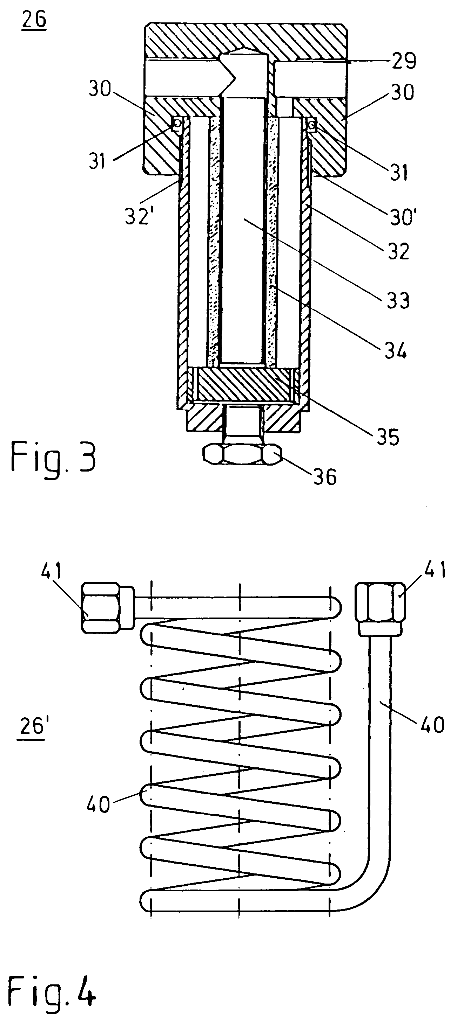

Das Messgas wird über einen Messgaskreislauf 22, 22′ mit seinem Eingang I und Ausgang O, der aus Druckleitungen besteht, dem Taupunktspiegel 3 zu- und abgeführt. Parallel dazu sind in einem ebenfalls aus Druckleitungen bestehenden Nebenkreislauf 23 ein Gasventil 24, eine Injektorpumpe 25 und eine Befeuchtungseinheit 26 angeordnet, die seriell zusammengeschlossen sind. Das Gasventil 24 ist ein handelsübliches Nadelventil (Swagelok, Handelsmarke der Firma Crawford Fitting Company, Ont., Canada) und ein vorgeschaltetes, ebenfalls handelsübliches Rückschlagventil. Die Injektorpumpe 25 ist eine Schiebepumpe nach dem Verdrängungsprinzip, eine Saug-Druck-Pumpe der Baureihe G-07 der Firma Helmut Brey GmbH + Co.KG, D-8940 Memmingen (Prospekt B09/85-2). Für Anwendungen bei hohen Drücken wird eine Hochdruckpumpe eingesetzt (MBW ELEKTRONIK AG, CH-5430 Wettingen, Prospekt Februar 1985). Der maximale Druck des Messgases kann mit dieser Hochdruckpumpe 200 bar betragen. Die Befeuchtungseinheit 26, Fig. 3, ist im wesentlichen wie ein T-förmiges Feinfilter aufgebaut und besteht aus einer Aluminiumlegierung (MBW ELEKTRONIK AG, CH-5430 Wettingen, Typ MFB, Bedienungsanleitung K-1806, Ausgabe Mai 1985, Seite 21). Einzelheiten dieser Befeuchtungseinheit 26 sind der Fig. 3 zu entnehmen, in welcher ein Filterkopf 30 mit Gewinden 29 ersichtlich ist. Ein zylindrisches Gefäss 32, welches randseitig mit seinem Gewinde 32′ in das Gewinde 30′ des Filterkopfs eingeschraubt ist, wird durch einen O-Ring 31 abgedichtet. Im Innern befindet sich ein gasdurchlässiger Trägerkern 33 mit einem darauf aufgesetzten porösen Körper 34 (handelsübliche Filterpatrone aus Borosilikatfasern), welcher durch einen Einsatz 35 und einem Schraubstopfen 36 gehalten und zentriert ist.

Die geringe Menge Wasser, die zur Injektion ausreicht, ist im porösen Körper 34 gespeichert. Dieser wird in Abständen von einigen Monaten mit destilliertem Wasser benetzt und wieder eingebaut.

Die Injektorpumpe 25 wird von der automatischen Spiegelkontrolleinheit 17 gesteuert, sobald eine vorgewählte Temperatur erreicht wird, die unterhalb des zu messenden Taupunktes liegt. Es wird dann eine Menge von etwa 5cm³ Gas hohen Wassergehaltes über das Gasventil 24 in den Messgaskreislauf 22 injiziert, worauf der Taupunktspiegel 3 unmittelbar mit einem Tau- oder Reifüberzug belegt wird. Wie vorhin dargelegt, wird der Überschuss an Wassermolekülen bald von dem Messgas aufgenommen, das einen wesentlich geringeren Wassergehalt - d.h. von 0,04 ppm bis etwa 38 ppm entsprechend einem Taupunkt von 178 K bis 223 K aufweist. Das Messgas wird mit einer Durchflussgeschwindigkeit von 20 bis 40 l/h bei normalem Druck an dem Taupunktspiegel 3 entlang geführt.

Die vorgewählte Temperatur soll, wenn möglich, mindestens 10°C unterhalb des zu erwartenden Taupunktes liegen, damit rechtzeitig eine genügend dicke Initial-Tauschicht auf dem Taupunktspiegel 3 gebildet wird. Meistens erfolgt die Injektion bei einer vorgewählten Temperatur von 10°C bis 20°C unterhalb des zu erwartenden Taupunktes, jedoch wenn ein sehr tiefer Taupunkt erwartet wird, kann die Injektion bei der tiefsten Spiegeltemperatur, d.h. bei 178 K (entspricht -95°C), ausgeführt werden.

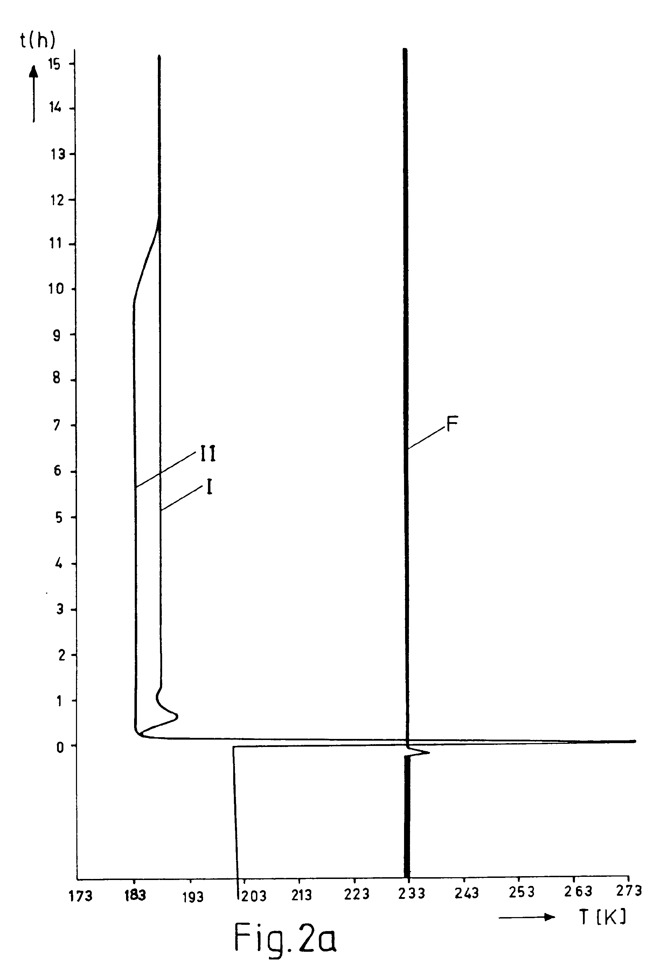

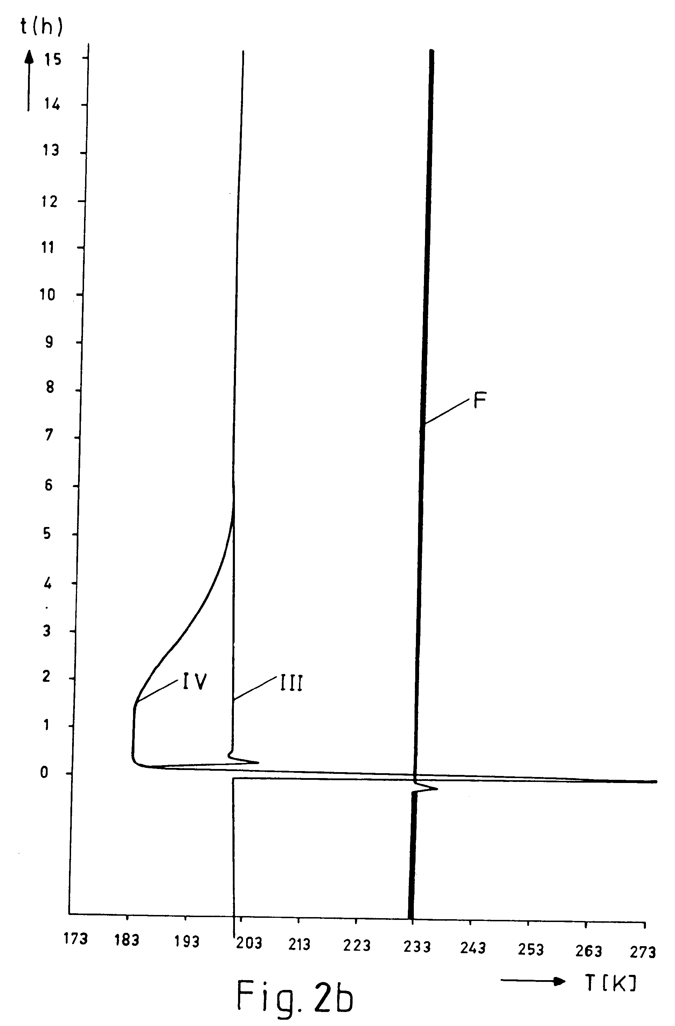

In den Fig. 2a und Fig. 2b sind die Aufzeichnungen von zwei verschiedenen Messungen mit und ohne Injizieren eines Gases hohen Wassergehaltes, mit daraus resultierenden unterschiedlichen Betauungszeiten dargestellt. Dabei sind auf den Abszissen die Temperatur T in K aufgetragen und auf den Ordinaten die Zeiten t in Stunden (h). Die breitere Linie F, bei 233 K, ist die Aufzeichnung des Temperaturverlaufs eines Freon-Vorkühlers, welcher hier anstatt des Wasserkühlers 7 und des unterstützenden Ventilators 8 verwendet worden ist. Dieser zeigt eine hohe Temperaturstabilität und bewirkt eine sehr genaue Messung.

Das Diagramm I, Fig. 2a, zeigt die Betauungszeit eines Gases mit einem Taupunkt von 185 K mit einer Gas-Injektion der obenerwähnten Art. Die Kurve II zeigt dieselbe Taupunktmessung des gleichen Gases nach der bisher üblichen Art.

Es kann daraus ersehen werden, dass die Messung nach dem neuen Verfahren nach weniger als 1,5 Stunden erfolgt ist, wogegen die Messung nach der bisherigen Art zirka 11,5 Stunden benötigt.

Das Diagramm III, Fig. 2b, zeigt die Betauungszeit eines zweiten Gases mit einem Taupunkt von 200 K mit Feucht-Gas-Injektion, und die Kurve IV zeigt dieselbe Taupunktmessung ohne diese Injektion. Auch ist hier ersichtlich, dass die Messung nach dem neuen Verfahren nach 45 Minuten bereits abgeschlossen ist, wogegen die Messung nach dem herkömmlichen Verfahren zirka 6 Stunden dauert.

Die in den Diagrammen ersichtlichen Transienten im Temperaturverlauf sind eine Folge der an sich bekannten, automatischen Spiegelreinigung.

Alternativ zur vorgängig beschriebenen Befeuchtungseinrichtung, Fig. 3, dient die in praxis bevorzugte Einrichtung 26′, eine in Fig. 4 dargestellte schraubenlinienförmige Rohrleitung 40 aus einem hygroskopischen Polyamid.

Die Feuchtigkeit der Umgebung diffundiert durch die Wände der Rohrleitung 40, welche zur Vergrösserung ihrer Oberfläche in Schraubenlinienform gewickelt ist; sie befeuchtet das durchströmende Gas in ausreichendem Masse.

Bewährt hat sich eine Rohrleitung 40 aus Ertalon (Handelsmarke für ein Polyamid der Firma Erta, Tielt, Belgien) mit einer gestreckten Länge von 1200 mm und einem Innendurchmesser von 4 mm und einem Aussendurchmesser von 6 mm. Endseitig sind handelsübliche Schraubverbindungen 41 mit nicht dargestellten Schneidringen aufgesetzt. Die Schraubenform der Rohrleitung wird in einfacher Weise durch Wickeln auf einen Aluminiumkörper und nachfolgendes Erwärmen auf 120°C während zwei Stunden erzielt.

Der Erfindungsgegenstand hat sich besonders für eine kontinuierliche Taupunktmessung und Überwachung bewährt.

Die Befeuchtungseinrichtung 26 bedarf einer regelmässigen Wartung und könnte bei mehrmonatigem Nichtgebrauch zur Bildung von Bakterien führen. Demgegenüber ist die Befeuchtungseinrichtung 26′ völlig wartungsfrei und birgt keinerlei Gefahr von Verunreinigungen des zu bestimmenden Gases in sich.

## Patentansprüche

1. Verfahren zur Bestimmung des Taupunktes eines feuchten Gases mittels eines an einem gekühlten Taupunktspiegel (3) reflektierten Lichtstrahles, dadurch gekennzeichnet, dass bei Messungen tieferer Taupunkte, der Taupunkt-Spiegel (3) kurzzeitig mit einem Gas hohen Wassergehaltes beaufschlagt wird, so dass eine Initial-Tauschicht auf dem Taupunkt-Spiegel (3) entsteht, und dass nachfolgend das Messgas über den Taupunkt-Spiegel (3) geführt wird.

2. Verfahren nach Anspruch 1, dadurch gekennzeichnet, dass der Taupunktspiegel (3) automatisch bei Erreichen einer vorgewählten Temperatur, die tiefer liegt als diejenige des Taupunkts des Messgases, mit dem Gas hohen Wassergehaltes beaufschlagt wird.

3. Verfahren nach Anspruch 1 oder 2, dadurch gekennzeichnet, dass das zu messende Gas und das Gas hohen Wassergehaltes über miteinander zusammengeführte Druckleitungen (22′, 23) dem Spiegel zu- und von diesem abgeführt werden.

4. Taupunktmessgerät zur Durchführung des Verfahrens nach Anspruch 1 mit einem gekühlten Taupunkt-Spiegel (3), einer Messgas-Zufuhrleitung (22) mit einer vorgeschalteten Befeuchtungseinheit (26), einem Gaseventil (24) in der Messgas-zufuhrleitung (22), einer Lichtstrahl-Sende (5) und Detektoreinheit (6), sowie einem Temperaturmessgerät (4), dadurch gekennzeichnet, dass zwischen dem Gasventil (24) und der Befeuchtungseinheit (26) eine Injektorpumpe (25) vorgesehen ist, welche von einer automatischen Kontrolleinheit (17) so gesteuert wird, dass der Taupunkt-Spiegel (3) zuerst mit dem in der Befeuchtungseinheit (25) befindlichen Gas hohen Wassergehalts beaufschlagt wird.

5. Taupunktmessgerät nach Anspruch 4, dadurch gekennzeichnet, dass die Befeuchtungseinheit (26) unmittelbar über einer Druckleitung (23) mit der Messgas-Abfuhrleitung (22′) verbunden ist.

6. Taupunktmessgerät nach einem der Ansprüche 4 oder 5, dadurch gekennzeichnet, dass die Injektorpumpe (25) eine Schieberpumpe ist.

7. Taupunktmessgerät nach Anspruch 4, dadurch gekennzeichnet, dass das Gasventil (24) aus einem Nadelventil und einem Rückschlagventil besteht.

8. Taupunktmessgerät nach einem der Ansprüche 4 bis 7, dadurch gekennzeichnet, dass die Befeuchtungseinheit (26) aus einem T-förmigen Gehäuse besteht, in der sich ein mit destilliertem Wasser getränkter poröser Körper (34) befindet.

9. Taupunktmessgerät nach Anspruch 4, dadurch gekennzeichnet, dass die Befeuchtungseinheit (26′) aus einer hygroskopischen Rohrleitung (40) besteht.

10. Taupunktmessgerät nach Anspruch 9, dadurch gekennzeichnet, dass die Rohrleitung (40) eine schraubenlinienförmige Form aufweist und aus einem Polyamid besteht.

## Claims

1. A process for determining the dew point of a moist gas, by means of a light beam reflected on a cooled dew-point mirror (3), **characterised in that** when measuring lower dew points, the dew-point mirror (3) is briefly acted upon by a gas with a high water content, so that an initial dew layer is formed on the dew-point mirror (3), and subsequently the gas for measurement is guided over the dew-point mirror (3).

2. A process in accordance with claim 1, **characterised in that** the dew-point mirror (3) is automatically acted upon by the gas with a high water content once a pre-selected temperature has been reached, the said temperature being lower than that of the dew point of the gas for measurement.

3. A process in accordance with claim 1 or 2, **characterised in that** the gas for measurement and the gas with a high water content are delivered to and conveyed away from the mirror via joined pressure pipes (22′, 23).

4. Dew-point measuring equipment for carrying out the process in accordance with claim 1, with a cooled dew-point mirror (3), a feed pipe (22) for the gas for measurement, with a humidifying unit (26) arranged prior thereto, a gas valve (24) in the feed pipe (22) for the gas for measurement, an emitter (5) and a detector unit (6) for the light beam, and also temperature-measuring equipment (4), **characterised in that** an injector pump (25) is provided between the gas valve (24) and the humidifying unit (26), and is controlled by an automatic control unit (17) in such a manner that the dew-point mirror (3) is initially acted upon by the gas with a high water content which is located in the humidifying unit (25) [*sic*].

5. Dew-point measuring equipment in accordance with claim 4, **characterised in that** the humidifying unit (26) is directly connected - via a pressure pipe (23) - to the pipe (22′) which carries away the gas for measurement.

6. Dew-point measuring equipment in accordance with either claim 4 or 5, **characterised in that** the injector pump (25) is a piston valve pump.

7. Dew-point measuring equipment in accordance with claim 4, **characterised in that** the gas valve (24) comprises a needle valve and a non-return valve.

8. Dew-point measuring equipment in accordance with one of claims 4 to 7, **characterised in that** the humidifying unit (26) comprises a T-shaped casing in which there is located a porous body (34) saturated with distilled water.

9. Dew-point measuring equipment in accordance with claim 4, **characterised in that** the humidifying unit (26′) comprises a hygroscopic pipe line (40).

10. Dew-point measuring equipment in accordance with claim 9, **characterised in that** the pipe line (40) is helical in shape and consists of a polyamide.

## Revendications

1. Procédé de détermination du point de rosée d'un gaz humide au moyen d'un faisceau lumineux réfléchi sur un miroir embué (3) refroidi, caractérisé en ce que, pour des mesures de points de rosée relativement bas, un gaz d'une forte teneur en eau est temporairement injecté sur le miroir embué (3), de sorte qu'il en résulte une couche de rosée initiale sur le miroir embué (3), et en ce que le gaz de mesure est ensuite envoyé sur le miroir embué (3).

2. Procédé suivant la revendication 1, caractérisé en ce que le gaz d'une forte teneur en eau est automatiquement injecté sur le miroir embué (3), lorsqu'une température prédéfinie, inférieure au point de rosée du gaz de mesure, est atteinte.

3. Procédé suivant l'une des revendications 1 et 2, caractérisé en ce que le gaz à mesurer et le gaz d'une forte teneur en eau sont envoyés sur le miroir, et évacués de ce dernier, par l'intermédiaire de conduites sous pression (22′, 23), réunies entre elles.

4. Appareil de mesure du point de rosée pour la réalisation du procédé suivant la revendication 1, avec un miroir embué (3) refroidi, une conduite d'arrivée (22) du gaz de mesure avec un humidificateur amont (26), une soupape à gaz (24) dans la conduite d'arrivée (22) du gaz de mesure, un émetteur de faisceau lumineux (5) et un détecteur (6), et avec un thermomètre (4), caractérisé par une pompe à jet, prévue entre la soupape à gaz (24) et l'humidificateur (26), et pilotée par une unité de contrôle (17) automatique, de sorte que le gaz d'une forte teneur en eau, situé dans l'humidificateur (25), est d'abord injecté sur le miroir embué (3).

5. Appareil de mesure du point de rosée suivant la revendication 4, caractérisé en ce que l'humidificateur (26) est directement relié à La conduite d'évacuation (22′) du gaz de mesure par l'intermédiaire d'une conduite sous pression (23).

6. Appareil de mesure du point de rosée suivant l'une quelconque des revendications 4 et 5, caractérisé en ce que la pompe à jet (25) est une pompe de distribution par tiroir.

7. Appareil de mesure du point de rosée suivant la revendication 4, caractérisé en ce que la soupape à gaz (24) se compose d'une soupape à pointeau et d'une soupape antiretour.

8. Appareil de mesure du point de rosée suivant l'une quelconque des revendications 4 à 7, caractérisé en ce que l'humidificateur (26) se compose d'un carter en T, dans lequel se situe un corps (34) poreux, imprégné d'eau distillée.

9. Appareil de mesure du point de rosée suivant la revendication 4, caractérisé en ce que l'humidificateur (26′) se compose d'un tuyau hygroscopique (40).

10. Appareil de mesure du point de rosée suivant la revendication 9, caractérisé en ce que le tuyau (40) présente une forme hélicoïdale, et se compose d'un polyamide.
